# EUROPÄISCHE PATENTSCHRIFT

(11) **EP 0 968 880 B1**
(45) Veröffentlichungstag und Bekanntmachung des Hinweises auf die Patenterteilung: **30.03.2005**
(21) Anmeldenummer: 99111902.5
(22) Anmeldetag: 18.06.1999
(51) Int. Cl.: B60Q 11/00, B60T 17/22, B60T 8/00, B60T 8/32, B60T 8/88

(54) **Einrichtung zur Strom- und/oder Spannungsversorgung eines Fahrzeuganhängers für die Versorgung von Bremskomponenten**
Device for the electric current supply for the braking components of a vehicule trailer
Dispositif pour alimenter en courant et tension les éléments des freins d'une remorque de véhicule

(30) Priorität: 01.07.1998 DE 19829489
(43) Veröffentlichungstag der Anmeldung: 05.01.2000
(73) Patentinhaber: KNORR-BREMSE SYSTEME FÜR NUTZFAHRZEUGE GMBH, 80809 München (DE)
(72) Erfinder: Mederer, Martin, 80336 München (DE)
(74) Vertreter: Seemann, Ralph, Dr. Dipl.-Phys.

(56) Entgegenhaltungen:
- DE-A- 19 608 970
- US-A- 4 793 661
- US-A- 5 263 771
- US-A- 5 549 362
- ROUQUETTE J: "CONTROLE DE L'ABS SUR LES VEHICULES DE LA GAMME VOLVO" REVUE TECHNIQUE DIESEL, ETAI. BOULOGNE-BILLANCOURT, FR, Bd. 32, Nr. 191, 1995, Seiten 17-37, XP000494814 ISSN: 0037-2579

## Beschreibung

Die Erfindung betrifft eine Einrichtung zur Strom- und/oder Spannungsversorgung eines Fahrzeuganhängers für die Versorgung von Bremskomponenten des Fahrzeuganhängers, bei der der Fahrzeuganhänger mit dem Zugfahrzeug durch eine erste Versorgungsleitung in Verbindung steht, *wobei eine zweite Versorgungsleitung vorgesehen ist* und eine entsprechende Verwendung.

Bei Bremssystemen von Nutzfahrzeugen, und insbesondere bei Bremssystemen für Fahrzeuganhänger und Fahrzeugauflieger, wird übticherweise die Funktion des Bremsens des Fahrzeuganhängers bzw. Fahrzeugaufliegers mittels eines elektronischen Bremssystems durchgeführt. Aus Sicherheitsgründen werden üblicherweise Zweileitungs-Bremsanlagen verwandt, wobei die genannten Leitungen üblicherweise zum Leiten von Druckluft oder einer Flüssigkeit vorgesehen sind. Mittels des elektronischen Bremssystems werden abhängig von den verschiedenen Parametern, wie beispielsweise Beladung des Anhängers oder Stärke der Betätigung des Bremspedals durch die Bedienperson, die zur Bremsung notwendigen mechanischen bzw. pneumatischen Komponenten gesteuert und/oder geregelt. Insbesondere werden bei Anhängern immer häufiger Antiblockiersysteme verwendet, die eine entsprechende Steuerung bzw. Regelung benötigen.

Zur Strom- und/oder Spannungsversorgung der elektrischen bzw. elektronischen Komponenten, die mit der Bremseinrichtung des Anhängers bzw. Aufliegers in Zusammenhang stehen, wird üblicherweise eine Versorgungsleitung verwendet, die von dem Zugfahrzeug über einen Stecker zum Fahrzeuganhänger reicht.

Aus der DE 196 08 970 A1 ist es bekannt, die Strom- oder Spannungsversorgung bei einem Fahrzeuganhänger oder Fahrzeugauflieger über eine Bremslichtleitung und eine Anzeigeleitung vorzusehen. Diese gattungsgemäße Einrichtung zur Strom- oder Spannungsversorgung ist derart ausgestaltet, dass über die Bremslichtleitung andauernd ein geringer Strom fließt, so dass die Stromversorgung von elektrischen Verbrauchern mittels dieses Stromes erfolgen kann. Die genannte Stromversorgung hat allerdings den Nachteil, dass die die elektrische Versorgung benötigenden Verbraucher, die im Anhänger angeordnet sind, nicht mehr mit elektrischer Energie versorgt werden, sofern die Verbindung zwischen dem Zugfahrzeug und dem Anhänger unterbrochen ist oder aber die Versorgung aus sonstigen Gründen ausfällt. D.h., dass beispielsweise bei Ausfall der Versorgung der elektronischen Komponenten auch das elektronische Bremssystem ausfällt. So kann beispielsweise, wenn das elektronische Bremssystem auch ein Antiblockiersystem vorsieht, dieses bei Ausfall der Versorgungsleitung zur Bremsung nicht mehr verwendet werden, sondern es müssen die üblichen bekannten Not- bzw. Aufallsbremseinrichtungen zur Anwendung kommen, die auch die bekannten Nachteile aufweisen, nämlich insbesondere den Nachteil, dass keine kontrollierte Bremsung des Anhängers möglich ist und insbesondere eine Blockierung der Räder bei diesem so genannten Backup-Fall sehr wahrscheinlich ist.

Die US-A-5 549 362 beschreibt ein Bremssystem für ein Fahrzeug, bei dem ein Bremssignal in ein elektrisches Bremsanforderungssignal umgewandelt und einer elektronischen Steuervorrichtung übermittelt wird, das ein elektronisches Bremsenbetätigungssignal erzeugt. Die elektronische Steuervorrichtung wird durch wenigstens zwei Stromversorgungen mit Strom versorgt.

Die vorliegende Erfindung hat die Aufgabe, eine gattungsgemäße Einrichtung zur Strom- und/oder Spannungsversorgung eines Fahrzeuganhängers für die Versorgung von Bremskomponenten des Fahrzeuganhängers derart weiterzubilden, dass das elektrische Bremssystem sowohl im normalen Betriebsbremsfall als auch im Backup-Fall und/oder bei Ausfall der Versorgungsleitung ermöglicht wird.

Gelöst wird diese Aufgabe durch die Merkmale des Patentanspruchs 1 und die Merkmale des Patentanspruchs 7.

Erfindungsgemäß wird eine Einrichtung zur Strom- und/oder Spannungsversorgung eines Fahrzeuganhängers für die Versorgung von Bremskomponenten des Fahrzeuganhängers, bei der der Fahrzeuganhänger mit dem Zugfahrzeug durch eine erste Versorgungsleitung in Verbindung steht, *wobei* wenigstens eine zweite Versorgungsleitung vorgesehen ist, *dadurch weitergebildet, dass bei Ausfall der ersten Versorgungsleitung die Strom- und*/*oder Spannungsversorgung über die wenigstens eine zweite Versorgungsleitung ermöglicht ist, wobei eine Erkennungsvorrichtung vorgesehen ist, mittels der der Ausfall der ersten Versorgungsleitung detektierbar ist.* Durch diese erfindungsgemäße Lösung ist es im Normalbetrieb für das elektronische Bremssystem des Anhängers möglich, eine Versorgung über beispielsweise ISO 7638 und/oder ISO 11992 vorzusehen. Hierzu werden beispielsweise gemäß der ISO 7638 zur Strom- und/oder Spannungsversorgung die Kontakte 2 und 3 der Steckverbindung zwischen Zugfahrzeug und Anhängerfahrzeug verwendet. Bei Ausfall dieser Spannungsversorgungsvariante wird das elektronische Bremssystem des Anhängers über eine andere Leitung versorgt. Diese andere Leitung kann über die Belegung von Kontaktnummern gemäß der ISO 7638 über den gleichen Stecker aber durch Belegung anderer Kontaktnummern geschehen oder aber vorzugsweise über eine andere Steckverbindung, wie beispielsweise eine gemäß der ISO 1185. Da über diese Versorgungsvariante ausreichend Strom bzw. Spannung zur Verfügung gestellt werden kann, können auch im Backup-Fall alle Verbraucher, die eine entsprechende Versorgung benötigen, weiterhin ausreichend versorgt werden. Es ist zudem bei Vorsehen einer entsprechend schnellen Umschaltung auf die zweite Versorgungsleitung auch möglich, die gesetzlich geforderten Ansprech- und Schwellzeiten zu erreichen, die insbesondere vorsehen, dass nach 0,4 Sekunden nach einem Drucksprung am Anhängerbremsventil der am weitesten entfernt gelegene Bremszylinder mit 90 % des Drucksprungs beaufschlagt sein muss. Es werden insbesondere über die zweite Versorgungsleitung die elektronische Kontroll- bzw. Steuereinheit, die Druckmesssensoren, die Ansteuerung eines Backup-Ventils und die seitenweise Ansteuerung je eines von jeweils zwei Antiblockiersystem-Ventilen ermöglicht, wobei es ausreichend sein kann, um die Funktion "Halten bzw. Entlüften" zu realisieren, je eines von zwei Schaltventilen anzusteuern.

Vorzugsweise ist bei Ausfall der ersten Versorgungsleitung die Stromund/oder Spannungsversorgung über die wenigstens eine zweite Versorgungsleitung ermöglicht. Wenn vorzugsweise die zweite Versorgungsleitung die Stopplichtversorgungsleitung ist, ist gewährleistet, dass eine ausreichende Strom- und/oder Spannungsversorgung ermöglicht wird. Vorzugsweise ist die zweite Versorgungsleitung die Versorgungsleitung der rechten oder linken Schlussleuchte. Durch diese beiden vorgenannten bevorzugten Maßnahmen ist es möglich, mit möglichst geringem weiteren Kabelaufwand eine sichere Handhabung des elektronischen Bremssystems zu ermöglichen.

Vorzugsweise ist die zweite Versorgungsleitung eine über freie Steckverbindungen der Dosen- und Steckeranordnung an dem Fahrzeug und/oder dem Fahrzeuganhänger angeordnete Versorgungsleitung.

*Durch Vorsehen* einer Erkennungsvorrichtung, mittels der der Ausfall der ersten Versorgungsleitung detektierbar ist, ist eine schnelle Umschaltung auf die zweite Versorgungsleitung möglich. Vorzugsweise ist eine Schaltvorrichtung vorgesehen, die die Strom- und/oder Spannungsversorgung von der zweiten Versorgungsleitung auf die Versorgungsleitung der Bremskomponenten aufschaltet.

Vorzugsweise wird die vorgenannte Einrichtung zur Strom- und/oder Spannungsversorgung eines Fahrzeuganhängers und insbesondere der mit den Bremskomponenten in Verbindung stehenden Verbraucher verwendet.

Erfindungsgemäß wird eine Stopplichtversorgungsleitung als Stromund/oder Spannungsversorgungsleitung für die Versorgung der elektronischen und/oder elektrischen Komponenten der Bremseinrichtung eines Fahrzeuganhängers verwendet, wenn die Versorgung der Bremseinrichtung ausgefallen ist. Durch diese erfindungsgemäße Maßnahme ist es möglich, bei Ausfall der eigentlichen Bremseinrichtungsversorgungsleitung die Verbraucher des elektronischen Bremssystems noch ausreichend mit Strom und/oder Spannung zu versorgen.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigt:

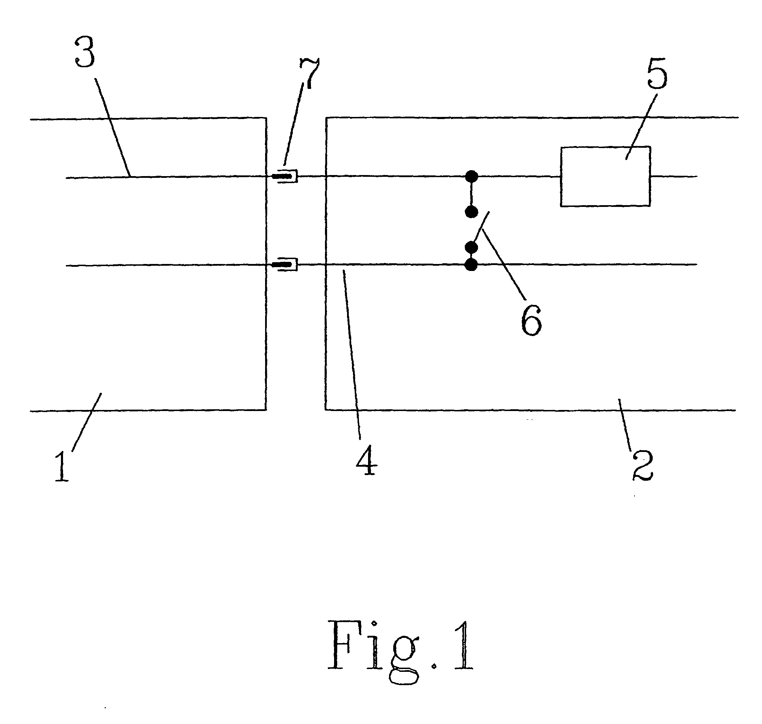

- Fig. 1: eine erfindungsgemäße Ausführungsform in schematischer Darstellung.

Fig. 1 zeigt eine erfindungsgemäße Ausführungsform einer Einrichtung zur Strom- und/oder Spannungsversorgung eines Fahrzeuganhängers für die Versorgung von Bremskomponenten des Fahrzeuganhängers. Im linken Teil der Fig. 1 ist schematisch das Zugfahrzeug 1 dargestellt. Auf der rechten Seite ist schematisch der Anhänger 2 dargestellt. Über eine Versorgungsleitung 3 wird Strom und/oder Spannung über eine Steckverbindung 7 der elektronischen Steuereinheit 5 zur Verfügung gestellt. Bei Auswahl dieser Versorgungsleitung, sei es durch Kabelbruch der Versorgungsleitung 3 selbst oder durch einen Fehler der Steckverbindung 7, wird mittels Umschaltens des Schalters 6, der auch beispielsweise ein Relais sein kann, die Versorgung der elektronischen Steuereinheit 5 über die Stopplichtversorgungsleitung 4 ermöglicht. Im Rahmen dieser Erfindung bedeutet "Fahrzeuganhänger" auch "Fahrzeugauflieger".

Insbesondere kann auch eine Ausführungsform gewählt werden, bei der nicht über einen Bereich der Versorgungsleitung 3 die zweite Versorgungsleitung an die elektronischen Komponenten der Bremsanlage des Anhängers, wie insbesondere der elektronischen Steuereinheit, angeschlossen wird, sondern wenigstens teilweise direkt an die jeweiligen Komponenten bzw. Verbraucher.

### Bezugszeichenliste

- 1: Zugfahrzeug
- 2: Fahrzeuganhänger
- 3: Versorgungsleitung
- 4: Stopplichtversorgungsleitung
- 5: elektronische Steuereinheit
- 6: Schalter
- 7: Steckverbindung

## Patentansprüche

1. Einrichtung zur Strom- und/oder Spannungsversorgung eines Fahrzeuganhängers (2) für die Versorgung von Bremskomponenten (5) des Fahrzeuganhängers (2), bei der der Fahrzeuganhänger (2) mit dem Zugfahrzeug (1) durch eine erste Versorgungsleitung (3) in Verbindung steht, wobei wenigstens eine zweite Versorgungsleitung (4) vorgesehen ist, **dadurch gekennzeichnet, dass** bei Ausfall der ersten Versorgungsleitung (3) die Strom- und/oder Spannungsversorgung über die wenigstens eine zweite Versorgungsleitung (4) ermöglicht ist, wobei die erste Versorgungsleitung (3) und die zweite Versorgungsleitung (4) zur Versorgung der Bremskomponenten (5) vorgesehen sind, und wobei eine Erkennungsvorrichtung vorgesehen ist, mittels der der Ausfall der ersten Versorgungsleitung (4) detektierbar ist.

2. Einrichtung nach Anspruch 1, **dadurch gekennzeichnet, dass** die zweite Versorgungsleitung (4) die Stopplichtversorgungsleitung ist.

3. Einrichtung nach Anspruch 1, **dadurch gekennzeichnet, dass** die zweite Versorgungsleitung (4) die Versorgungsleitung der rechten oder linken Schlussleuchte ist.

4. Einrichtung nach Anspruch 1, **dadurch gekennzeichnet, dass** die zweite Versorgungsleitung (4) eine über freie Steckverbindungen (7) in einer Dosen- und Steckeranordnung an dem Fahrzeug und/oder Fahrzeuganhänger angeordnete Versorgungsleitung ist.

5. Einrichtung nach einem oder mehreren der Ansprüche 1 bis 4, **dadurch gekennzeichnet, dass** eine Schaltvorrichtung (6) vorgesehen ist, die die Strom- und/oder Spannungsversorgung von der zweiten Versorgungsleitung (4) auf die Versorgungsleitung der Bremskomponenten aufschaltet.

6. Verwendung der Einrichtung nach einem oder mehreren der Ansprüche 1 bis 5 zur Strom- und/oder Spannungsversorgung eines Fahrzeuganhängers (2).

7. Verwendung einer Stopplichtversorgungsleitung (4) als Stromund/oder Spannungsversorgungsleitung für die Versorgung der elektronischen und/oder elektrischen Komponenten einer Bremseinrichtung eines Fahrzeuganhängers (2), wenn die Versorgung der Bremseinrichtung ausgefallen ist, wobei in diesem Fall eine Umschaltung der Versorgung über die Stoplichtversorgung vorgesehen ist.

## Claims

1. Current and/or voltage supply system of a vehicle trailer (2) for supplying brake components (5) of the vehicle trailer (2), whereby the vehicle trailer (2) is connected to the towing vehicle (1) by a first supply line (3) and at least one second supply line (4) is provided, **characterised in that** if the first supply line (3) fails, the current and/or voltage supply is enabled via the at least one second supply line (4), the first supply line (3) and the second supply line (4) being provided as a means of supplying the brake components (5), and a detection system is provided, by means of which failure of the first supply line (4) can be detected.

2. System as claimed in claim 1, **characterised in that** the second supply line (4) is the stop and tail light supply line.

3. System as claimed in claim 1, **characterised in that** the second supply line (4) is the supply line of the right-hand or left-hand stop and tail light.

4. System as claimed in claim 1, **characterised in that** the second supply line (4) is a supply line run via free plug and socket connections (7) in a socket and plug arrangement on the vehicle and/or vehicle trailer.

5. System as claimed in one or more of claims 1 to 4, **characterised in that** a switching device (6) is provided, which switches the current and/or voltage supply from the second supply line (4) to the supply line of the brake components.

6. Use of the system as claimed in one of more of claims 1 to 5 for supplying the current and/or voltage of a vehicle trailer (2).

7. Use of a stop and tail light supply line (4) as a current and/or voltage supply line for supplying the electronic and/or electric components of a brake system of a vehicle trailer (2) if the supply to the brake system fails, in which case the supply is switched via the stop and tail light supply.

## Revendications

1. Dispositif d'alimentation en courant et/ou en tension d'une remorque (2) de véhicule automobile pour l'alimentation d'éléments (5) de frein de la remorque (2) du véhicule automobile, dans lequel la remorque (2) du véhicule automobile est en liaison avec le véhicule (1) de traction par une première ligne (3) d'alimentation, au moins une deuxième ligne (4) d'alimentation étant prévue, **caractérisé en ce qu'**en cas de défaillance de la première ligne (3) d'alimentation, l'alimentation en courant et/ou en tension est rendue possible par la au moins deuxième ligne (4) d'alimentation, la première ligne (3) d'alimentation et la première ligne (4) d'alimentation étant prévues pour alimenter les éléments (5) de frein et dans lequel il est prévu un dispositif de détection au moyen duquel on peut détecter la défaillance de la première ligne (4) d'alimentation.

2. Dispositif suivant la revendication 1, **caractérisé en ce que** la deuxième ligne (4) d'alimentation est une ligne d'alimentation d'un feu d'arrêt.

3. Dispositif suivant la revendication 1, **caractérisé en ce que** la deuxième ligne (4) d'alimentation est la ligne d'alimentation du feu arrière droit ou du feu arrière gauche.

4. Dispositif suivant la revendication 1, **caractérisé en ce que** la deuxième ligne (4) d'alimentation est une ligne d'alimentation montée sur le véhicule automobile et/ou sur la remorque du véhicule par des connections (7) libres à enfichage dans un agencement de prise et de connecteur.

5. Dispositif suivant l'une ou plusieurs des revendications 1 à 4, **caractérisé en ce qu'**il est prévu un dispositif (6) de commutation qui interrompt l'alimentation en courant et/ou en tension allant de la deuxième ligne (4) d'alimentation à la ligne d'alimentation des éléments de frein.

6. Utilisation du dispositif suivant l'une ou plusieurs des revendications 1 à 5, pour l'alimentation en courant et /ou en tension d'une remorque (2) de véhicule automobile.

7. Utilisation d'une ligne (4) d'alimentation d'un feu d'arrêt comme ligne d'alimentation en courant et/ou en tension pour l'alimentation des composants électroniques et/ou électriques d'un dispositif de frein d'une remorque (2) de véhicule automobile lorsque l'alimentation du dispositif de frein est défaillant, dans lequel dans ce cas, il est prévu une commutation de l'alimentation sur l'alimentation du feu d'arrêt.
